# EUROPEAN PATENT SPECIFICATION

(11) **EP 4 053 741 B1**
(45) Date of publication and mention of the grant of the patent: **16.10.2024**
(21) Application number: 22159082.1
(22) Date of filing: 28.02.2022
(51) Int. Cl.: G06K 17/00, B41J 3/50, B65C 11/02, B41J 3/407, B65C 9/00

(54) **PRINTER ASSEMBLY WITH SMALL PITCH RADIO FREQUENCY IDENTIFICATION (RFID) LABEL DETECTION**
DRUCKERVORRICHTUNG MIT ERKENNUNG VON RADIOFREQUENZIDENTIFIKATIONSETIKETTEN (RFID) MIT KLEINEM ABSTAND
ENSEMBLE IMPRIMANTE AVEC DÉTECTION D'ÉTIQUETTES D'IDENTIFICATION PAR RADIOFRÉQUENCE (RFID) À PETIT PAS

(30) Priority: 01.03.2021 US 202117188149
(43) Date of publication of application: 07.09.2022
(73) Proprietor: Hand Held Products, Inc., Fort Mill, SC 29707 (US)
(72) Inventor: HAO, Zheng, Charlotte, SC 28202 (US); CHIAP, Cheng Yong, Charlotte, SC 28202 (US); RAMLI, Rizam Bin, Charlotte, SC 28202 (US); LEE, Chin Wee, Charlotte, SC 28202 (US)
(74) Representative: Haseltine Lake Kempner LLP

(56) References cited:
- EP-A1- 3 594 855
- US-A- 6 104 291
- US-A1- 2015 165 802

## Description

### TECHNICAL FIELD

Exemplary embodiments of the present disclosure relate generally to radio frequency identification (RFID) and, more particularly, to encoding an RFID inlay.

### BACKGROUND

Applicant has identified a number of deficiencies and problems associated with conventional RFID printers. Through applied effort, ingenuity, and innovation, many of these identified problems have been solved by developing solutions that are included in embodiments of the present disclosure, many examples of which are described in detail herein. EP3594855A1, against which claim 1 is delimited, discloses a method for encoding a Radio Frequency Identification (RFID) inlay.

The method includes causing, by a processor, a media to travel along a media path in an RFID printer. The media includes a plurality of labels. Each label of the plurality of labels comprises an RFID inlay. US6104291A discloses a method and apparatus for testing RFID tags using wireless radio frequency (RF) communication. US2015/165802A1 discloses a system and method for loading and unloading consumable supplies of a printer.

### BRIEF SUMMARY

Various embodiments illustrated herein disclose a printer assembly that includes a media hub configured to receive a media roll and supply a media from the media roll along a media path. The media includes a plurality of labels, with each label of the plurality of labels comprising a Radio Frequency Identification (RFID) inlay. The printer assembly also includes a media guide positioned adjacent to the media path.

The media guide includes an RFID antenna. The RFID antenna is communicatively coupled to an RFID control system and configured to transmit signals to encode the RFID inlay on a first label of the plurality of labels. The media guide also includes at least one shield. The at least one shield is positioned adjacent to the RFID antenna to prevent, during an encoding of the RFID inlay on the first label of the plurality of labels, an encoding of the RFID inlay on a second label of the plurality of labels. The at least one shield is configured to be removable from the media guide, and wherein the at least one shield is configured to be attached to the media guide at more than one position.

In various embodiments, the at least one shield comprises a material capable of absorbing electromagnetic signals. In some embodiments, the material is copper. In some embodiments, the media guide comprises a material allowing the signals transmitted by the RFID antenna to pass through the media guide. In some embodiments, the material of the media guide is plastic. In some embodiments, the material of the media guide is transparent.

In some embodiments, the media guide defines a plane extending outward from a wall of a housing of a printer. In some embodiments, the media guide comprises a first shield positioned downstream from the RFID antenna and a second shield positioned upstream from the RFID antenna.

In other various embodiments, a printer assembly is disclosed. The printer assembly includes a media guide positioned adjacent to a media path. The media guide includes an RFID antenna communicatively coupled to an RFID control system and configured to transmit signals to encode an RFID inlay on a media along the media path. The media guide also includes at least one shield positioned to prevent, during an encoding of the RFID inlay, an encoding of a second RFID inlay on the media. The at least one shield is configured to be removable from the media guide, and wherein the at least one shield is configured to be attached to the media guide at more than one position. In various embodiments, the at least one shield comprises a material capable of absorbing electromagnetic signals. In some embodiments, the material is copper. In some embodiments, the media guide comprises a material allowing the signals transmitted by the RFID antenna to pass through the media guide. In some embodiments, the material of the media guide is plastic. In some embodiments, the material of the media guide is transparent.

In some embodiments, the media guide defines a plane extending outward from a wall of a housing of a printer. In some embodiments, the media guide comprises a first shield positioned downstream from the RFID antenna and a second shield positioned upstream from the RFID antenna.

In other various embodiments, a media guide is disclosed. The media guide is configured to be coupled to a housing of a printer. The media guide includes an RFID antenna configured to transmit signals to encode an RFID inlay. The media guide also includes at least one shield positioned adjacent to the RFID antenna.

The above summary is provided merely for purposes of providing an overview of one or more exemplary embodiments described herein so as to provide a basic understanding of some aspects of the disclosure. Accordingly, it will be appreciated that the above-described embodiments are merely examples and should not be construed to narrow the scope of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIGS. 1A-1C illustrate an example RFID printer, according to the one or more embodiments described herein;
FIGS. 2A-2B illustrate schematics of an RFID printer assembly, according to one or more embodiments described herein;
FIGS. 2C-2D illustrates example representations of an example media guide, according to one or more embodiments described herein;
FIG. 3 illustrates a block diagram of an RFID encoder, according to one or more embodiments described herein; and
FIG. 4 illustrates a block diagram of a control system of the RFID printer, according to one or more embodiments described herein.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout. Terminology used in this patent is not meant to be limiting insofar as devices described herein, or portions thereof, may be attached or utilized in other orientations.

The term "comprising" means including but not limited to, and should be interpreted in the manner it is typically used in the patent context. Use of broader terms such as "comprises," "includes," and "having" should be understood to provide support for narrower terms such as "consisting of," "consisting essentially of," and "comprised substantially of."

The phrases "in one embodiment," "according to one embodiment," and the like generally mean that the particular feature, structure, or characteristic following the phrase may be included in at least one embodiment of the present disclosure, or may be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

The term "radio frequency identification (RFID) inlay" is used herein to correspond to an RFID tag that includes an integrated circuit (IC), an antenna element, and a substrate. In an example embodiment, the antenna element and the IC are fabricated on the substrate. Further, the IC is communicatively coupled to the antenna element through an interconnect on the substrate. In an example embodiment, the integrated circuit in the RFID inlay may be configured to store encoded information or the encoded data. In some examples the RFID inlay may be configured to operate in various RF frequency bands such as, but not limited to, 13.56 MHz (hereinafter High Frequency Band) or 860 MHz-960 MHz (UHF band). In some example embodiments, the RFID inlay may have a dedicated power source that may enable the RFID inlay to communicate with one or more components, such as an RFID encoder and an RFID reader. Such RFID inlays are referred to as active RFID inlays. In alternative example embodiments, the RFID inlay may not have a dedicated power source. In such embodiments, the RFID inlay may have a power coupler that is capable of inducing electrical charge when the RFID inlay is brought in an RF field. The induced electrical charge is thereafter used to power the RFID inlay itself.

The word "media" is used herein to mean a printable medium, such as a page or paper, on which content, such as graphics, text, and/or visual images, may be printable. In some embodiments, the media may correspond to a continuous media that may be loaded in an RFID printer in form of a roll or a stack, or may correspond to media that may be divided into a plurality of labels through perforations defined along a width of the media. Alternatively or additionally, the media may be divided into the plurality of labels through one or more marks that are defined at a predetermined distance from each other, along the length of the media. In some example embodiments, a contiguous stretch of the media, between two consecutive marks or two consecutive perforations, corresponds to a label of the media. In an example embodiment, each label of the plurality of labels includes a corresponding RFID inlay.

Various embodiments describe an RFID printer that is capable of encoding an RFID inlay provided on a plurality of labels in a media. The RFID printer defines a media travel path along which media in the RFID printer traverses. As was described above and in some examples, the media includes a plurality of labels, and each label of the plurality of labels further includes an RFID inlay. In operation and in some examples, the RFID printer may facilitate traversal of the media along the media path so as to encode RFID inlay in at least one of the plurality of labels. In some examples, the RFID printer comprises an RFID antenna, positioned adjacent to the media path, that is configured to transmit a signal to encode the RFID inlay provided on each of the plurality of labels. Because the RFID antenna is positioned adjacent to the media path, the RFID antenna facilitates encoding the RFID inlay on the plurality of labels while the media traverses along the media path.

In various embodiments, the RFID antenna is coupled to a media guide. The media guide is positioned adjacent to the media path and is configured to guide the media along the media path and prevent the media from skewing as the media traverses along the media path. Alternatively or additionally, the RFID antenna may be positioned adjacent to a media hub, a print head engine, and/or other structures along the media path

To encode the RFID inlay on a label of the plurality of labels while the media traverses along the media path, a media sensor generates an input signal as the media traverses along the media path. Based on the input signal, a processor in the RFID printer may be configured to determine a real-time location of the label (that includes the RFID inlay to be encoded). In some examples, after determining the real-time location of the label, the processor may instruct an RFID control system to encode the RFID inlay on the label by transmitting a signal through the RFID antenna. Because the RFID printer according to the various embodiments encodes the RFID inlay as the media traverses along the media path, there is no need to halt the traversal of the media in order to enable the RFID antenna to encode the RFID inlay.

In some examples, however, errors may arise during an encoding of an RFID inlay on a media having a small pitch. The term "pitch" describes a distance from a leading edge of an RFID inlay to a leading edge of the RFID inlay of the next adjacent label on the media. In other words, if labels of a media have a small pitch, the RFID inlays are positioned close (e.g., less than 2,54 cm (one inch), in some examples, less than 1,27 cm (0.5 inch), and in other examples, less than 0,254 cm (0.1 inch)) together. Media having a small pitch may be desirable for purposes of cost-savings as well as inclusion of additional labels and RFID inlays on the media.

However, an RFID antenna may not be able to accurately encode information to a given RFID inlay while the media having a small pitch traverses the media path. That is, if there is a target RFID inlay, an upstream RFID inlay, and a downstream RFID inlay, each of these multiple RFID inlays may be detected simultaneously by the RFID antenna. This may result in errors such as an encoding of multiple RFID inlays at once (e.g., each of the target RFID inlay, upstream RFID inlay, and downstream RFID inlay, resulting in portions of information missing from the encoded RFID inlays, or may result in the RFID antenna not encoding any RFID labels as multiple RFID inlays are continuously simultaneously detected as the media traverses the media path.

Various example embodiments disclosed herein are configured to comprise a media guide comprising at least one shield, such as a shield that is configured to shield an upstream or downstream RFID inlay from receiving an encoding signal. That is, the at least one shield is positioned adjacent to the RFID antenna to prevent, during an encoding of an RFID inlay on a first label of the plurality of labels, an encoding of the RFID inlay on a label upstream and on a label downstream from the first label. In this regard, the at least one shield is configured to absorb radio and/or other electromagnetic waves during an encoding process of an RFID label that would otherwise encode one or more additional RFID inlays.

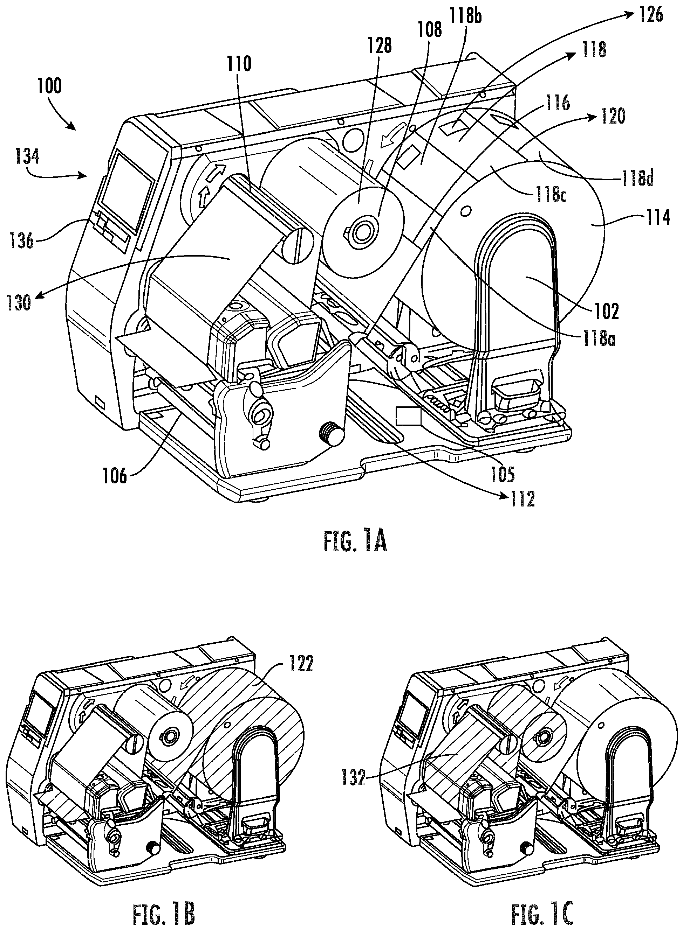

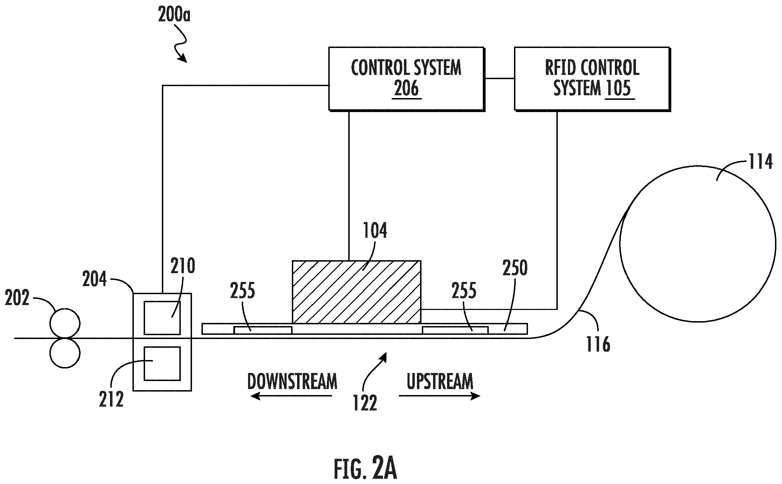

FIGS. 1A-1C illustrate an example RFID printer 100, according to the one or more embodiments described herein. The RFID printer 100 may include a media hub 102, an RFID antenna 104 (described further below in conjunction with FIG. 2A-B), an RFID control system 105, and a media output slot 106. In some examples, the RFID printer 100 may include a ribbon drive assembly 108, a ribbon take-up hub 110, and a print head 112.

In some example embodiments, the media hub is configured to receive a media roll 114. In some examples, the media roll 114 may correspond to a roll of a media 116 that may have a plurality of labels 118. FIG. 1A illustrates example labels 118a, 118b, 118c, and 118d, for example. The plurality of labels 118 may be defined on the media 116 by means of perforations 120. In alternative embodiments, the plurality of labels 118 may be defined on the media 116 by means of one or more marks (not shown). In some examples, the media hub 102 may be coupled to a first electrical drive (not shown) that actuates the media hub 102. On actuation, the media hub 102 causes the media roll 114 to rotate, which further causes the media 116 to travel/traverse along a media path 122 (as shown in the shaded portion in FIG. 1B).

In some example embodiments, the scope of the disclosure is not limited to the media hub 102 facilitating supply of the media 116 along the media path 122. In alternative embodiment, the RFID printer 100 may further include a platen roller (an example platen roller is further described in FIG. 2A), in addition to the media hub 102, that may be positioned along the media path 122. In such an embodiment, the platen roller may be coupled to the first electrical drive, which actuates the platen roller. On actuation, the platen roller may be configured to pull the media 116 from the media roll 114 (mounted on the media hub 102), causing the media 116 to travel along the media path 122.

Additionally or alternately, the first electrical drive may be coupled to both the platen roller and the media hub 102 such that both the platen roller and the media hub 102 operate in sync. Such configuration of the RFID printer 100 (that includes the platen roller and the media hub 102) is further described in conjunction with FIG. 2A.

The RFID antenna 104 corresponds to an antenna element that is positioned adjacent to the media path 122. In some examples, the RFID antenna 104 is coupled to a media guide 250 (described further below in conjunction with FIG. 2A-D). In an example embodiment, the RFID antenna 104 may facilitate encoding of an RFID inlay 126 provided on each of the plurality of labels 118 (on the media 116), while the media traverses along the media path 122.

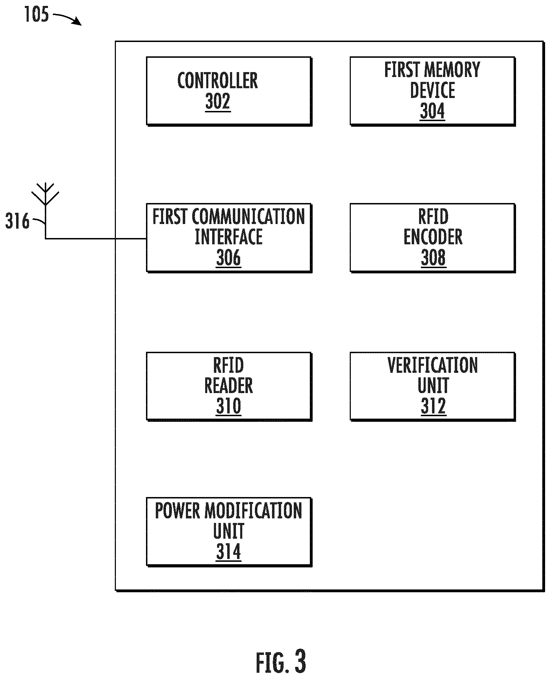

The RFID control system 105 may include suitable logic and circuitry to control the operation of at least the RFID antenna 104. For example, the RFID control system 105 includes an RFID encoder and an RFID reader that may cause the RFID antenna 104 to encode and read the RFID inlay 126, respectively. The structure and operation of the RFID control system 105 has been described in conjunction with FIG. 3.

In some examples, as discussed above, the RFID control system 105 causes the RFID antenna 104 to encode the RFID inlay 126 on one of the labels 118 of the plurality of labels while the media 116 traverses along the media path 122. Therefore, subsequent to the encoding of the RFID inlay 126, the encoded RFID inlay 126 is outputted from the media output slot 106. In an example embodiment, the media output slot 106 corresponds to a slot in a housing of the RFID printer 100, through which the label 118 with an encoded RFID inlay 126 is outputted.

In addition to encoding the RFID inlay 126 provided on each of the labels 118, the RFID printer 100, in some example implementations, may print content on the labels 118. To facilitate printing of the content on the labels 118, the RFID printer 100 may further include the ribbon drive assembly 108, the ribbon take-up hub 110, and the print head 112.

The ribbon drive assembly 108 may receive a ribbon roll 128 that corresponds to a roll of a ribbon 130. In an example embodiment, the ribbon 130 may correspond to an ink media that is utilized to dispose ink onto the media 116 to print content on the media 116 (*e.g.,* label 118). In some example implementations, the ribbon drive assembly 108 may be coupled to a third electrical drive that may be configured to actuate the ribbon drive assembly 108. On actuation, the ribbon drive assembly 108 rotates, which in turn causes the ribbon roll 128 to rotate and supply the ribbon 130 along a ribbon path 132 (as shown in the shaded in FIG. 1C). Along the ribbon path 132, the ribbon 130 traverses from the ribbon drive assembly 108 to the print head 112 and further to the ribbon take-up hub 110.

In an example embodiment, the ribbon take-up hub 110 may correspond to an assembly that may receive used ribbon (i.e., a section of the ribbon 130 from which the ink has been is disposed on the media 116). The ribbon take-up hub 110 may also be coupled to the third electrical drive that may be configured to actuate the ribbon take-up hub 110. On actuation, the ribbon take-up hub 110 pulls the ribbon 130 from the ribbon roll 128, causing the ribbon 130 to move along the ribbon path 132. In an example embodiment, the third electrical drive (coupled to both the ribbon drive assembly 108 and the ribbon take-up hub 110) enables synchronized operation of the ribbon drive assembly 108 and the ribbon take-up hub 110 such that the amount of ribbon released by the ribbon roll 128 is equal to the amount of ribbon received by the ribbon take-up hub 110. For example, a length of the ribbon 130 released by the ribbon roll 128 is same as the length of the ribbon 130 received by the ribbon take-up hub 110.

The print head 112 may correspond to a component that is configured to print the content on the media 116 (*e.g.,* label 118). In an example embodiment, the print head 112 is provided on the media path 122 and the ribbon path 132. The print head 112 includes a plurality of heating elements (not shown) that are energized and pressed against the ribbon 130 to perform a print operation. During the print operation, the print head 112 concurrently applies heat on a section of the ribbon 130 and presses the ribbon 130 against the media 116 to transfer the ink on the media 116. In some examples, after the print operation, the media 116 and the ribbon 130 traverse along the media path 122 and the ribbon path 132, respectively, such that the printed media is outputted from the media output slot 106 and the used ribbon traverses to the ribbon take-up hub 110.

In some example embodiments, the RFID printer 100 may further include an input panel 134 that further includes one or more buttons 136. The one or more buttons may correspond to input devices through which a user of the RFID printer 100 may provide inputs, causing the RFID printer 100 to perform a predetermined operation. For example, the user of the RFID printer 100 may provide input through the one or more buttons 136 to configure settings of the RFID printer 100 and/or cause the RFID printer 100 to perform an encoding and/or printing of one or more labels. Some examples of the one or more buttons 136 may include, but are not limited to push buttons, soft push buttons, touch buttons, and/or the like.

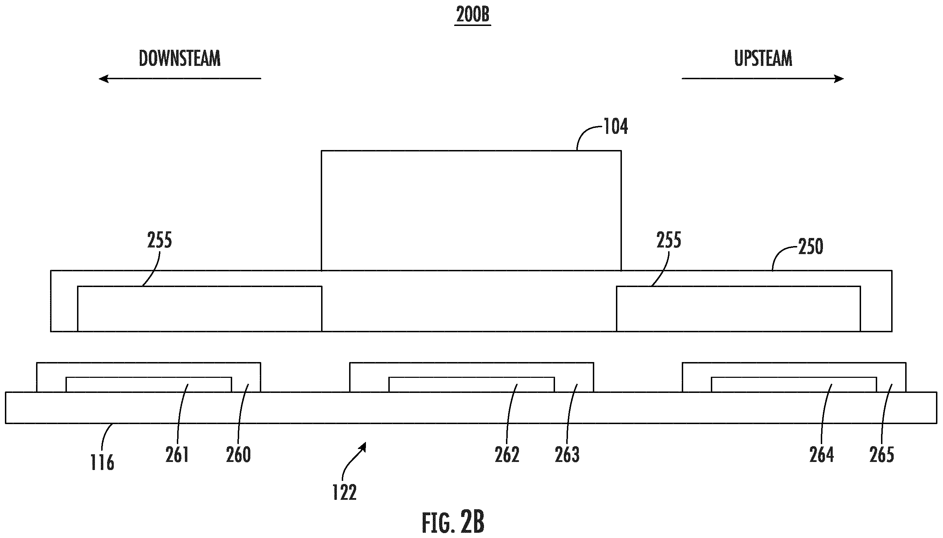

FIGS. 2A and 2B illustrate example schematics 200a and 200b of the RFID printer 100, according to one or more embodiments described herein. The schematics 200a and 200b of the RFID printer 100 illustrate that the RFID printer 100 may further include a platen roller 202, a media sensor 204, a media guide 250, one or more shields 255, and a control system 206 in some embodiments. The schematics 200a and 200b of the RFID printer 100 further depicts the media path 122. Further, the schematics 200a and 200b illustrate that the RFID antenna 104 is positioned adjacent to the media path 122 such that the RFID antenna 104 is pointed towards the media 116 on the media path 122. Further, in some examples, the RFID antenna 104 is positioned upstream of the media sensor 204. In an example embodiment, the term "upstream" according to the one or more embodiments described herein corresponds to a direction opposite to media traversal direction along the media path 122 during encoding of the RFID inlay 126 on the labels 118. In an example embodiment, the term "downstream" according to the one or more embodiments described herein corresponds to a direction same as the media traversal direction along the media path 122 during encoding of the RFID inlay 126 on the labels 118.

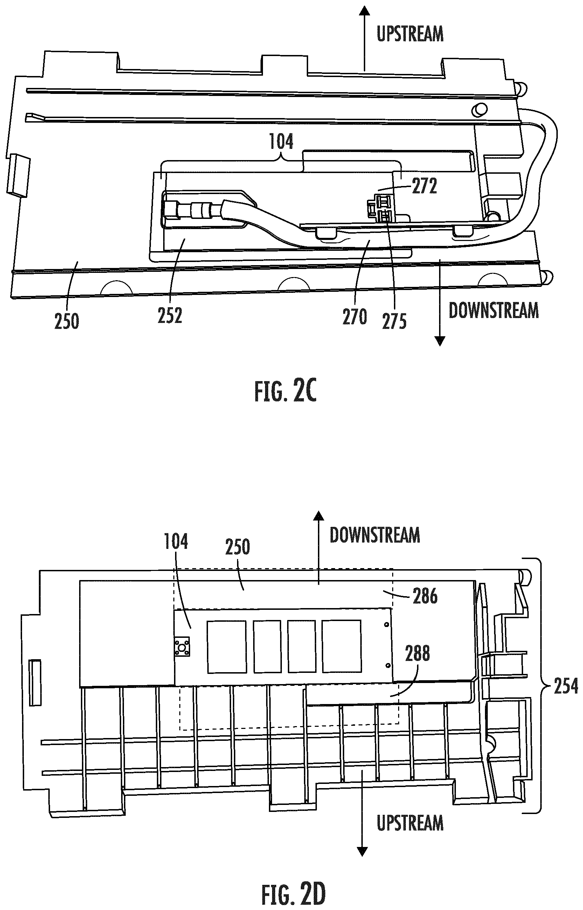

FIG. 2C shows an example top view of an example media guide 250 and FIG. 2D shows an example bottom view of an example media guide 250. In example embodiments, as shown in FIG. 2C, the RFID antenna 104 is coupled or otherwise attached to the media guide 250, such as via a slot 252 defined by the media guide 250, and communicatively coupled to the RFID control system 105 (e.g., via a coaxial cable 270). As shown, the RFID antenna 104 may include a grounding element 272 and one or more resistors 275. In this regard, an antenna connection is made from a center pin of the coaxial cable 270 to the antenna 104 through the grounding element 272. In this regard, energy enters an RFID reader 310 through a power cable or Ethernet connection and is directed through the RFID control system 105 and into the center pin of the coaxial cable 270. The energy is then sent through the length of the coaxial cable 270 and moves through the opposite center pin, through a center antenna connection located on or within the grounding element 272 and is then radiated out from the antenna 104 in the form of RF signals toward an RFID inlay in range.

The media guide 250 defines a plane that may be coupled or otherwise attached to the housing of the printer 100. An example shape of the plane defined by the media guide 250 is shown in FIGS. 2C and 2D. In this regard, the media guide may attach to (at side 254) and extend outward from a wall of the housing of the printer 100. In some embodiments, the media guide may be configured to be detachable and removable from the housing of the printer 100. In some embodiments, the media guide is adjacent to the media path 122, as shown in FIG. 2A and 2B, in order to maintain the media path and prevent the media from skewing from the media path. The RFID antenna 104 may be coupled or otherwise attached to a top portion of the media guide 250 (e.g., via slot 252), such that the RFID antenna 104 rests on top of the media guide 250, as shown in FIG. 2C, while the media traverses underneath the bottom portion of the media guide, as shown in FIG. 2D.

In some embodiments, the media guide 250 is comprised of plastic or other non-metallic material such that the media guide 250 does not interfere with signals (e.g., RF and/or other electromagnetic signals) transmitted from the RFID antenna 104 to one or more RFID inlays during an encoding process. In some embodiments, the media guide 250 may be transparent such that light may pass through the media guide.

In example embodiments, one or more shields 255 may be coupled, fastened and/or otherwise attached to the media guide. The one or more shields 255 may be attached to the media guide in various ways. For example, the shields 255 may clip and/or snap on to the media guide, and/or stick to the media guide (e.g., to the top or bottom of the media guide, via an adhesive). In some examples, the shields 255 may be inserted into the media guide. In this regard, in some embodiments, the media guide may define one or more openings configured to receive the one or more shields 255.

In this regard, the one or more shields 255 may be configured to be removable from the media guide and positioned elsewhere on the media guide. For example, the shields 255 may be positioned on the media guide based on the pitch of the labels of the media 116. For example, for labels having a small pitch (e.g., in some examples, less than 2,54 cm (one inch), in some examples, less than 1,27 cm (0.5 inch), and in other examples, less than 0,254 cm (0.1 inch)), the shields 255 may be positioned closer to the RFID antenna (e.g., as shown in FIG. 2A and 2B).

In various embodiments, the one or more shields 255 are comprised of a metallic material capable of absorbing RF and/or other electromagnetic signals transmitted by the RFID antenna 104. For example, in some embodiments, the shields are comprised of copper. In some embodiments, the shields are square or rectangularly shaped, though it is to be appreciated that the shields may be shaped in various ways. In various embodiments, the shields may comprise a thickness of 0.5 millimeters. It is to be appreciated that the thickness of the shields may vary in some embodiments. For example, a thickness of the shields may be less than or greater than 0.5 millimeters. In various embodiments, the one or more shields 255 comprise a length greater than or equal to a length of the antenna 104. In various embodiments, the one or more shields 255 comprise a width at least equal to a width of the media 116. For example, the one or more shields 255 may comprise a width at least equal to a maximum media width supported by the printer 100, such that the entirety of a label of the media upstream and/or downstream from the RFID antenna 104 is shielded during an encoding process.

In some embodiments, two shields 255 may be attached to the media guide 250, as shown in FIG. 2B, and positioned on the media guide 250 upstream and downstream from the RFID antenna 104 such that a first RFID inlay 261 of a first label 260 downstream from the RFID antenna 104 having already undergone an encoding process by the RFID antenna 104 and a second RFID inlay 264 of a second label 265 upstream from the RFID antenna are prevented from being detected and/or encoded by the RFID antenna 104 while a third RFID inlay 262 of a third label 263 currently below the RFID antenna 104 is undergoing an encoding process as the media 116 traverses the media path 122. In other words, during the encoding process, the shields 255 are positioned such that the shields 255 absorb RF and/or other electromagnetic signals emitted by the RFID antenna 104 that would otherwise encode one or more additional RFID inlays 261 and 264, while still allowing the RFID inlay 262 below the RFID antenna 104 to be encoded. In this regard, the shields 255 diminish the RF field directly below the shields 255 such that the RFID labels are not detected and/or encoded until the RFID inlay traverses into the RF field directly below the RFID antenna 104. For example, as shown in FIG. 2D, a shield may be attached to the media guide 250 upstream from the RFID antenna at position 288 and a second shield may be attached to the media guide 250 downstream from the RFID antenna 104 at position 286.

In another embodiment, a single shield may be attached to the media guide 250 and positioned on the media guide 250 upstream and downstream from the RFID antenna 104 such that a first RFID inlay 261 of a first label 260 downstream from the RFID antenna 104 having already undergone an encoding process by the RFID antenna 104 and a second RFID inlay 264 of a second label 265 upstream from the RFID antenna are prevented from being detected and/or encoded by the RFID antenna 104 while a third RFID inlay 262 of a third label 263 currently below the RFID antenna 104 is undergoing an encoding process as the media 116 traverses the media path 122. In this regard, the single shield may comprise an opening in the middle that allows transmission of RF and/or electromagnetic signals from the RFID antenna 104 to pass through.

In some embodiments, as shown in FIG. 2A, in an example embodiment, the platen roller 202 is positioned downstream of the print head 112 along the media path 122. As discussed above, the platen roller 202 is coupled to the first electrical drive that enables the platen roller 202 to rotate and pull the media 116 from the media roll 114, and accordingly cause the media 116 to travel along the media path 122.

The media sensor 204 may correspond to a sensor that is configured to detect a presence of the media 116 on the media path 122. In an example embodiment, the media sensor 204 is positioned upstream of the print head 112 and downstream of the RFID antenna 104. In some example embodiments, the media sensor 204 may be configured to detect the presence of the media 116 by determining transmissivity and/or reflectivity of the media 116. In an example embodiment, the transmissivity of the media 116 may correspond to a measure of an intensity of a light signal that the media 116 allows to pass through it. In an example embodiment, the reflectivity of the media 116 may correspond to a measure of an intensity of light signal that gets reflected from a surface of the media 116.

In an example embodiment, the media sensor 204 includes a light transmitter 210 and a light receiver 212. The light transmitter 210 may correspond to a light source, such as a Light Emitting Diode (LED), a LASER, and/or the like. The light transmitter 210 may be configured to direct the light signal on the media path 122.

The light receiver 212 may correspond to at least one of a photodetector, a photodiode, or a photo resistor. The light receiver 212 may generate an input signal based on an intensity of the light signal received by the light receiver 212. In an example embodiment, the input signal may correspond to a voltage signal, where one or more characteristics of the voltage signal, such as the amplitude of the voltage signal and frequency of the voltage signal, are directly proportional to the intensity of the portion of the light signal received by the light receiver 212.

In operation, the light transmitter 210 of the media sensor 204 may be configured to direct the light signal on the media path 122. If the media 116 is present on the media path 122, a portion of light signal may get reflected from the surface of the media 116. The light receiver 212 may receive the portion of the light signal, and based on the intensity of the portion of the received light signal, the light receiver 212 generates the input signal. In some implementations, where the media 116 is not present on the media path 122, the light receiver 212 may not receive the portion of the light signal (transmitted by the light transmitter), and therefore may not generate the input signal. Accordingly, based on the input signal generated by the media sensor 204, the presence of the media 116 on the media path 122 may be determined.

Additionally or alternatively, the media sensor 204 may determine the presence of the media 116 on the media path 122 based on the transmissivity of the media 116. In such an implementation, the light receiver 212 may receive the portion of the light signal that passes through the media 116. To receive the portion of the light signal that passes through the media 116, the light receiver 212 is spaced apart from the light transmitter 210 in such a manner that the media of media roll 114 passes through a space between the light receiver 212 and the light transmitter 210. When the light transmitter 210 directs the light signal on the media 116, the portion of the light signal passes through the media 116, which is then received by the light receiver 212. The light receiver 212, thereafter, may generate the input signal in accordance with the intensity of the portion of light signal received.

In some embodiments, the media sensor 204 may be utilized to detect a start portion and an end portion of the label 118a of the plurality of labels 118 in the media 116. In an example embodiment, the start portion of the label 118a may correspond to a first perforation between the label 118a and another label preceding the label 118a. In an example embodiment, the end portion of the label 118a may correspond to a second perforation between the label 118a and a yet another label succeeding the label 118a. As discussed above, the media 116 may include the plurality of labels 118 that are separated either by perforations 120 or by the one or more marks (not shown). Therefore, when such marks or perforations 120 on the media 116 passes over the media sensor 204 during traversal of the media 116 along the media path 122, the media sensor 204 may detect a sudden increase/decrease in the measure of transmissivity/reflectivity of media 116. Such sudden increase/decrease in the measure of the transmissivity/reflectivity of media 116 is reflected in the input signal generated by the media sensor 204. For example, the input signal generated by the media sensor 204 may include peaks or valleys indicating a sudden increase or decrease in the measure of the transmissivity/reflectivity of media 116. Such peaks and valleys may be utilized to determine the start portion or the end portion of the label of the plurality of labels 118.

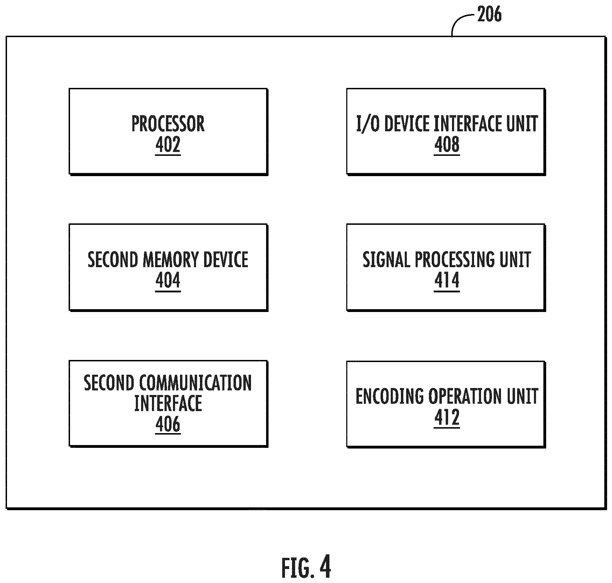

Referring to the FIG. 2A and 2B, the RFID control system 105 is communicatively coupled to the RFID antenna 104 and the control system 206. The control system 206 may include suitable logic and circuitry to control the operation of the RFID printer 100. In an example embodiment, the control system 206 may be communicatively coupled to one or more components of the RFID printer 100. For example, the control system 206 may be communicatively coupled to the print head 112, the media sensor 204, the RFID control system 105, the first electrical drive (associated with the media hub 102 and the platen roller 202), the third electrical drive (coupled to the ribbon drive assembly 108 and the ribbon take-up hub 110), and the second electrical drive (coupled to the RFID antenna 104). The structure of the control system 206 is further described in conjunction with FIG. 4.

In some example embodiments, the scope of the disclosure is not limited to the RFID printer 100 that performs both the RFID inlay encoding and printing operations. In some example implementations, the RFID printer 100 may not perform the printing operation and may only perform the RFID inlay encoding operation. In such implementation, the RFID printer 100 may not include the print head 112, the ribbon drive assembly 108, and the ribbon take-up hub 110.

FIG. 3 illustrates a block diagram of the RFID control system 105, according to one or more embodiments described herein. The RFID control system 105 includes a controller 302, a first memory device 304, a first communication interface 306, an RFID encoder 308, an RFID reader 310, a verification unit 312, and a power modification unit 314.

The controller 302 may be embodied as means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit (ASIC) or field programmable gate array (FPGA), or some combination thereof. Accordingly, although illustrated in FIG. 3 as a single controller, in an embodiment, the controller 302 may include a plurality of controllers and signal processing modules. The plurality of controllers may be embodied on a single electronic device or may be distributed across a plurality of electronic devices collectively configured to function as the circuitry of the RFID control system 105. The plurality of controllers may be in operative communication with each other and may be collectively configured to perform one or more functionalities of the circuitry of the RFID control system 105, as described herein. In an example embodiment, the controller 302 may be configured to execute instructions stored in the first memory device 304 or otherwise accessible to the controller 302. These instructions, when executed by the controller 302, may cause the circuitry of the RFID control system 105 to perform one or more of the functionalities, as described herein.

Whether configured by hardware, firmware/software methods, or by a combination thereof, the controller 302 may include an entity capable of performing operations according to embodiments of the present disclosure while configured accordingly. Thus, for example, when the controller 302 is embodied as an ASIC, FPGA or the like, the controller 302 may include specifically configured hardware for conducting one or more operations described herein. Alternatively, as another example, when the controller 302 is embodied as an executor of instructions, such as may be stored in the first memory device 304, the instructions may specifically configure the controller 302 to perform one or more algorithms and operations described herein.

Thus, the controller 302 used herein may refer to a programmable microprocessor, microcomputer or multiple processor chip or chips that can be configured by software instructions (applications) to perform a variety of functions, including the functions of the various embodiments described above. In some devices, multiple processors may be provided dedicated to wireless communication functions and one processor dedicated to running other applications. Software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. The memory can also be located internal to another computing resource (e.g., enabling computer readable instructions to be downloaded over the Internet or another wired or wireless connection).

The first memory device 304 may include suitable logic, circuitry, and/or interfaces that are adapted to store a set of instructions that is executable by the controller 302 to perform predetermined operations. Some of the commonly known memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an embodiment, the first memory device 304 may be integrated with the controller 302 on a single chip, without departing from the scope of the disclosure.

The first communication interface 306 may correspond to a communication interface that may facilitate transmission and reception of messages and data to and from various components of the RFID printer 100. For example, the first communication interface 306 is communicatively coupled with the control system 206. Examples of the communication interface may include, but are not limited to, an antenna, an Ethernet port, a USB port, a serial port, or any other port that can be adapted to receive and transmit data. The communication interface transmits and receives data and/or messages in accordance with the various communication protocols, such as, I2C, TCP/IP, UDP, and 2G, 3G, 4G or 5G communication protocols.

The RFID encoder 308 includes suitable logic, and circuitry for encoding data in the RFID inlay 126 included in the plurality of labels 118 in the media. In some example embodiments, the RFID encoder 308 encodes data in the RFID inlay 126, according to one or more of Electronic Product code (EPC) or Department of Defense (DOD) formats. In some examples, the RFID encoder 308 may be configured to transmit the data (for the purpose of encoding the RFID inlay 126) over one or more frequency bands such as, but not limited to, 13.56 MHz (hereinafter "High Frequency band" or "HF") or 860 MHz-960 MHz (hereinafter "UHF band"), through the antenna element 316. Further, the RFID encoder 308 may be configured to modulate the data on an RF carrier of either HF frequency band or UHF band prior to transmitting the data for encoding the RFID inlay 126. Some examples of the modulation techniques utilized by the RFID encoder 308 include, but are not limited to, Phase Jitter Modulation (PJM), Amplitude Shift Keying (ASK), and/or the like.

In some examples, the RFID encoder 308 may be configured to transmit one or more commands to the RFID inlay 126 on the label 118a of the plurality of the labels 118, causing the RFID inlay 126 to perform a predetermined operation in accordance with the one or more commands. For example, the RFID encoder 308 may transmit a command "Write" that indicates to the RFID inlay 126 to write the data accompanied with the command in the memory of the RFID inlay 126. Similarly, the RFID encoder 308 may transmit other commands to the RFID inlay 126 such as but not limited to "Lock", "Access", "BlockWrite", and/or any other command according to the EPCglobal standards.

The RFID reader 310 includes suitable logic and circuitry for reading data from the RFID inlay (e.g., 126). To read the data encoded in the RFID inlay 126, the RFID reader 310 may transmit an interrogation command to the RFID inlay over the one or more frequency bands such as HF and UHF. Further, similar to the RFID encoder 308, the RFID reader 310 may also utilize the one or more modulation techniques such as ASK and PJM to transmit the interrogation command on the one or more frequency bands. In response to the interrogation command, the RFID reader 310 may receive the encoded data from the RFID inlay 126. In an example embodiment, the RFID reader 310 may utilize the antenna element 316 to transmit the interrogation command and receive the encoded data from the RFID inlay 126.

In some examples, both the RFID reader 310 and the RFID encoder 308 may include one or more of filters, analog to digital (A/D) converters, Digital to Analog (D/A) convertors, matching circuits, amplifiers, and/or tuners that enable the RFID reader 310 and the RFID encoder 308 to transmit and receive data over the one or more frequency bands through the antenna element 316.

The verification unit 312 includes suitable logic and circuitry that is configured to verify whether the encoding of the RFID inlay 126 is successful, as further described in FIGS. 10 and 13. In some examples, to determine whether the encoding is successful, the verification unit 312 may determine an encode success rate. The verification unit 312 may be implemented using one or more hardware components, such as, but not limited to, FPGA, ASIC, and the like.

The power modification unit 314 includes suitable logic and circuitry that is configured to manage a signal transmission power of the RFID antenna 104. In an example embodiment, the signal transmission power corresponds to a transmitter power output at which a signal is transmitted from the RFID antenna 104. In an example embodiment, the power modification unit 314 may be configured to modify the signal transmission power in accordance with a plurality of power settings. In an example embodiment, a power setting may correspond to a value of the signal transmission power with which the data is transmitted from the RFID antenna 104. In some examples, the power modification unit 314 may modify input voltage to the RFID antenna 104 to modify the signal transmission power. In an example embodiment, the power modification unit 314 may modify the signal transmission power in response to an instruction received from the control system 206. The power modification unit 314 may be implemented using one or more hardware components, such as, but not limited to, FPGA, ASIC, and the like.

FIG. 4 illustrates a block diagram of the control system 206 of the RFID printer 100, according to one or more embodiments described herein. The control system 206 includes a processor 402, a second memory device 404, a second communication interface 406, an input/output (I/O) device interface unit 408, a calibration unit 410, an encoding operation unit 412, and a signal processing unit 414.

The processor 402 may be embodied as means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit (ASIC) or field programmable gate array (FPGA), or some combination thereof. Accordingly, although illustrated in FIG. 4 as a single processor, in an embodiment, the processor 402 may include a plurality of processors and signal processing modules. The plurality of processors may be embodied on a single electronic device or may be distributed across a plurality of electronic devices collectively configured to function as the circuitry of the control system 206. The plurality of processors may be in operative communication with each other and may be collectively configured to perform one or more functionalities of the circuitry of the control system 206, as described herein. In an example embodiment, the processor 402 may be configured to execute instructions stored in the second memory device 404 or otherwise accessible to the processor 402. These instructions, when executed by the processor 402, may cause the circuitry of the control system 206 to perform one or more of the functionalities, as described herein.

Whether configured by hardware, firmware/software methods, or by a combination thereof, the processor 402 may include an entity capable of performing operations according to embodiments of the present disclosure while configured accordingly. Thus, for example, when the processor 402 is embodied as an ASIC, FPGA or the like, the processor 402 may include specifically configured hardware for conducting one or more operations described herein. Alternatively, as another example, when the processor 402 is embodied as an executor of instructions, such as may be stored in the second memory device 404, the instructions may specifically configure the processor 402 to perform one or more algorithms and operations described herein.

Thus, the processor 402 used herein may refer to a programmable microprocessor, microcomputer or multiple processor chip or chips that can be configured by software instructions (applications) to perform a variety of functions, including the functions of the various embodiments described above. In some devices, multiple processors may be provided dedicated to wireless communication functions and one processor dedicated to running other applications. Software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. The memory can also be located internal to another computing resource (e.g., enabling computer readable instructions to be downloaded over the Internet or another wired or wireless connection).

The second memory device 404 may include suitable logic, circuitry, and/or interfaces that are adapted to store a set of instructions that is executable by the processor 402 to perform predetermined operations. Some of the commonly known memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the second memory device 404 may be integrated with the processor 402 on a single chip, without departing from the scope of the disclosure.

The second communication interface 406 may correspond to a second communication interface 406 that may facilitate transmission and reception of messages and data to and from various devices. For example, the second communication interface 406 is communicatively coupled with a computing device (not shown). For example, through the second communication interface 406, the RFID printer 100 may be configured to receive commands/jobs from the computing device based on which the RFID printer 100 may perform predetermined operation. Examples of the second communication interface 406 may include, but are not limited to, an antenna, an Ethernet port, a USB port, a serial port, or any other port that can be adapted to receive and transmit data. The second communication interface 406 transmits and receives data and/or messages in accordance with the various communication protocols, such as, I2C, TCP/IP, UDP, and 2G, 3G, 4G or 5G communication protocols.

The I/O device interface unit 408 may include suitable logic and/or circuitry that may be configured to communicate with the one or more components of the RFID printer 100, in accordance with one or more device communication protocols such as, but not limited to, I2C communication protocol, Serial Peripheral Interface (SPI) communication protocol, Serial communication protocol, Control Area Network (CAN) communication protocol, and 1-Wire^{®} communication protocol. In an example embodiment, the I/O device interface unit 408 may communicate with the media sensor 204, the first electrical drive, the second electrical drive, the third electrical drive, associated with the media hub 102, the RFID antenna 104, and the ribbon drive assembly 108 and the ribbon take-up hub 110, respectively, and the one or more buttons 136 provided the input panel 134 of the RFID printer 100. For example, the I/O device interface unit 408 may receive the input signal from the media sensor 204. Further, for example, the I/O device interface unit 408 may actuate the first electrical drive associated with the media hub 102 and the platen roller 202 to cause the media 116 to traverse along the media path 122. Some examples of the I/O device interface unit 408 may include, but not limited to, a Data Acquisition (DAQ) card, an electrical drives driver circuit, and/or the like.

The encoding operation unit 412 may include suitable logic and/or circuitry for operating the RFID printer 100 in an encoding mode. In an example embodiment, the encoding operation unit 412 may be configured to cause the RFID encoder 308 in the RFID control system 105 to encode the RFID inlay 126 on the label 118a, through the RFID antenna 104. The encoding operation unit 412 may be implemented using one or more hardware components, such as, but not limited to, FPGA, ASIC, and the like.

The signal processing unit 414 may include suitable logic and/or circuitry for analyzing the input signal received from the media sensor 204. For example, the signal processing unit 414 may include a digital signal processor 402 that may be configured to identify the peaks and the valleys in the input signal. Further, the signal processing unit 414 may utilize one or more signal processing techniques such as, but not limited to, Fast Fourier Transform (FFT), Discrete Fourier Transform (DFT), Discrete Time Fourier Transform (DTFT) to analyze the input signal. The signal processing unit 414 may be implemented using one or more hardware components, such as, but not limited to, FPGA, ASIC, and the like.

In some examples the scope of the disclosure is not limited to having a separate control system 206 for the RFID printer 100. In an alternative embodiment, various units/modules of the control system 206 may be implemented on the RFID control system 105, forming an integrated, single apparatus, without departing from the scope of the disclosure. In another alternative embodiment, various functionalities of the RFID control system 105 may be implemented in the control system 206, forming an integrated, single apparatus, without departing from the scope of the disclosure. In such an implementation, the RFID antenna 104 may be directly communicatively coupled to the control system 206.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The hardware used to implement the various illustrative logics, logical blocks, modules, and circuits described in connection with the aspects disclosed herein may include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor 402 may be any processor, controller, or state machine. A processor 402 may also be implemented as a combination of computing devices, e.g., a combination of a DSP and a microprocessor, a plurality of microprocessors, one or more microprocessors in conjunction with a DSP core, or any other such configuration. Alternatively or in addition, some steps or methods may be performed by circuitry that is specific to a given function.

In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor 402-readable media. These instructions may be embodied by one or more processor 402-executable software modules that reside on the one or more non-transitory computer-readable or processor 402-readable storage media. Non-transitory computer-readable or processor 402-readable storage media may in this regard comprise any storage media that may be accessed by a computer or a processor 402. By way of example but not limitation, such non-transitory computer-readable or processor 402-readable media may include RAM, ROM, EEPROM, FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor 402-readable media. Additionally, any combination of instructions stored on the one or more non-transitory processor 402-readable or computer-readable media may be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

## Claims

1. A printer assembly (200b) comprising:
a media guide (250) positioned adjacent to a media path (122), wherein the media guide (250) comprises:
a Radio Frequency Identification, RFID, antenna (104), the RFID antenna (104) communicatively coupled to an RFID control system (105) and configured to transmit signals to encode an RFID inlay (262) on a media (116) along the media path (122); and
**characterized by**:
at least one shield (255) positioned to prevent, during an encoding of the RFID inlay (262), an encoding of a second RFID inlay on the media (116);
wherein the at least one shield (255) is configured to be removable from the media guide (250), and wherein the at least one shield (255) is configured to be attached to the media guide (250) at more than one position.

2. The printer assembly (200b) of claim 1, further comprising: a media hub (102) configured to receive a media roll (114) and supply the media from the media roll (114) along the media path (122), wherein the media includes a plurality of labels, wherein each label of the plurality of labels comprises a Radio Frequency Identification, RFID, inlay;
wherein the RFID inlay (262) being encoded by the signals transmitted by the RFID control system (105) is on a first label of the plurality of labels; and
wherein the second RFID inlay is on a second label of the plurality of labels.

3. The printer assembly (200b) of claim 2, wherein the at least one shield (255) comprises a material capable of absorbing electromagnetic signals.

4. The printer assembly (200b) of claim 3, wherein the material is copper.

5. The printer assembly (200b) of claim 4, wherein the media guide (250) comprises a material allowing the signals transmitted by the RFID antenna (104) to pass through the media guide.

6. The printer assembly (200b) of claim 5, wherein the material is plastic.

7. The printer assembly (200b) of claim 6, wherein the material is transparent.

8. The printer assembly (200b) of claim 2, wherein the media guide (250) defines a plane extending outward from a wall of a housing of a printer.

9. The printer assembly of claim 2, wherein the media guide (250) comprises a first shield (255) positioned downstream from the RFID antenna (104) and a second shield (255) positioned upstream from the RFID antenna (104).

## Patentansprüche

1. Druckeranordnung (200b), umfassend:
eine Medienführung (250), die angrenzend zu einem Medienpfad (122) positioniert ist, wobei die Medienführung (250) Folgendes umfasst:
eine Radiofrequenzidentifikations-, RFID-, Antenne (104), wobei die RFID-Antenne (104) kommunikativ mit einem RFID-Steuersystem (105) gekoppelt und dazu konfiguriert ist, Signale zu übertragen, um ein RFID-Inlay (262) auf einem Medium (116) entlang des Medienpfads (122) zu kodieren; und
**gekennzeichnet durch** Folgendes:
mindestens eine Abschirmung (255), die dazu positioniert ist, während eines Kodierens des RFID-Inlays (262) ein Kodieren eines zweiten RFID-Inlays auf dem Medium (116) zu verhindern;
wobei die mindestens eine Abschirmung (255) dazu konfiguriert ist, von der Medienführung (250) abnehmbar zu sein, und wobei die mindestens eine Abschirmung (255) dazu konfiguriert ist, an der Medienführung (250) in mehr als einer Position angebracht zu sein.

2. Druckeranordnung (200b) nach Anspruch 1, ferner umfassend:
ein Medienzentrum (102), das dazu konfiguriert ist, eine Medienrolle (114) aufzunehmen und das Medium von der Medienrolle (114) entlang des Medienpfads (122) zuzuführen, wobei das Medium eine Vielzahl von Etiketten beinhaltet, wobei jedes Etikett der Vielzahl von Etiketten ein Radiofrequenzidentifikations-, RFID-, Inlay beinhaltet;
wobei sich das RFID-Inlay (262), das durch die von dem RFID-Steuersystem (105) übertragenen Signale kodiert wird, auf einem ersten Etikett der Vielzahl von Etiketten befindet; und
wobei sich das zweite RFID-Inlay auf einem zweiten Etikett der Vielzahl von Etiketten befindet.

3. Druckeranordnung (200b) nach Anspruch 2, wobei die mindestens eine Abschirmung (255) ein Material umfasst, das in der Lage ist, elektromagnetische Signale zu absorbieren.

4. Druckeranordnung (200b) nach Anspruch 3, wobei das Material Kupfer ist.

5. Druckeranordnung (200b) nach Anspruch 4, wobei die Medienführung (250) ein Material umfasst, welches den von der RFID-Antenne (104) übertragenen Signalen erlaubt, durch die Medienführung hindurchzugelangen.

6. Druckeranordnung (200b) nach Anspruch 5, wobei das Material Kunststoff ist.

7. Druckeranordnung (200b) nach Anspruch 6, wobei das Material durchsichtig ist.

8. Druckeranordnung (200b) nach Anspruch 2, wobei die Medienführung (250) eine Ebene definiert, die sich von einer Wand eines Druckergehäuses nach außen erstreckt.

9. Druckeranordnung nach Anspruch 2, wobei die Medienführung (250) eine erste Abschirmung (255), die nachgelagert zu der RFID-Antenne (104) positioniert ist, und eine zweite Abschirmung (255), die vorgelagert zu der RFID-Antenne (104) positioniert ist, umfasst.

## Revendications

1. Un ensemble imprimante (200b) comprenant :
un guide de supports (250) positionné adjacent à un chemin de supports (122), dans lequel le guide de supports (250) comprend :
une antenne d'identification par Radiofréquence, RFID (104), l'antenne RFID (104) étant couplée de manière communicative à un système de contrôle RFID (105) et configurée pour transmettre des signaux afin de coder une incrustation RFID (262) sur des supports (116) le long du chemin de supports (122) ; et **caractérisé par** :
au moins un bouclier (255) positionné pour empêcher, pendant le codage de l'incrustation RFID (262), un codage d'une deuxième incrustation RFID sur les supports (116) ;
dans lequel au moins un bouclier (255) est configuré pour être amovible par rapport au guide de supports (250), et dans lequel au moins un bouclier (255) est configuré pour être fixé au guide de supports (250) à plus d'un emplacement.

2. Ensemble imprimante (200b) de la revendication 1, comprenant en outre :
un module de supports (102) configuré pour recevoir un rouleau de supports (114) et fournir les supports à partir du rouleau de supports (114) le long du chemin de supports (122), dans lequel les supports comprennent une pluralité d'étiquettes, dans lequel chaque étiquette de la pluralité d'étiquettes comprend une incrustation d'identification par Radiofréquence, RFID ;
dans lequel l'incrustation RFID (262) codée par les signaux transmis par le système de contrôle RFID (105) est sur une première étiquette de la pluralité d'étiquettes ; et
dans lequel la deuxième incrustation RFID est sur une deuxième étiquette de la pluralité d'étiquettes.

3. Ensemble imprimante (200b) de la revendication 2, dans lequel au moins un bouclier (255) comprend un matériau capable d'absorber les signaux électromagnétiques.

4. Ensemble imprimante (200b) de la revendication 3, dans lequel le matériau est du cuivre.

5. Ensemble imprimante (200b) de la revendication 4, dans lequel le guide de supports (250) comprend un matériau permettant aux signaux transmis par l'antenne RFID (104) de traverser le guide de supports.

6. Ensemble imprimante (200b) de la revendication 5, dans lequel le matériau est du plastique.

7. Ensemble imprimante (200b) de la revendication 6, dans lequel le matériau est transparent.

8. Ensemble imprimante (200b) de la revendication 2, dans lequel le guide de supports (250) définit un plan s'étendant vers l'extérieur à partir d'une paroi d'un boîtier d'une imprimante.

9. Ensemble imprimante de la revendication 2, dans lequel le guide de supports (250) comprend un premier bouclier (255) positionné en aval de l'antenne RFID (104) et un deuxième bouclier (255) positionné en amont de l'antenne RFID (104).
